# FASCICULE DE BREVET EUROPEEN

(11) **EP 1 015 259 B1**
(45) Date de publication et mention de la délivrance du brevet: **27.03.2002**
(21) Numéro de dépôt: 98930720.2
(22) Date de dépôt: 22.05.1998
(51) Int. Cl.: B60C 9/02, B60C 15/00

(54) **ANCRAGE DE LA CARCASSE D'UN PNEUMATIQUE**
VERANKERUNG EINER REIFENKARKASSE
TYRE BODY ANCHORING

(30) Priorité: 27.05.1997 FR 9706574
(43) Date de publication de la demande: 05.07.2000
(73) Titulaire: Compagnie Generale Des Etablissements Michelin-Michelin & Cie, 63040 Clermont-Ferrand Cédex 09 (FR)
(72) Inventeur: COSTA PEREIRA, Pedro, F-63000 Clermont-Ferrand (FR); HERBELLEAU, Yves, F-63200 Riom (FR)
(74) Mandataire: Dequire, Philippe Jean-Marie Denis
(86) Numéro de dépôt international: EP9803026
(87) Numéro de publication internationale: WO9854006

(56) Documents cités:
- EP-A- 0 582 196
- EP-A- 0 664 232
- WO-A-89/02492
- DE-C- 158 856
- DE-C- 579 877
- FR-A- 378 261
- FR-A- 2 132 509
- GB-A- 320 535
- GB-A- 990 524

## Description

La présente invention concerne les pneumatiques et plus particulièrement la disposition des fils de renforcement de carcasse et leur ancrage dans les bourrelets.

Les demandes de brevet EP 0 582 196 A1 et EP 0 664 232 A1, cette dernière considérée comme l'état de la technique le plus proche, correspondant au préambule de la revendication 1 et 2, ont récemment proposé un nouveau type d'armature de carcasse d'un pneumatique et de son ancrage dans ses deux bourrelets. Un pneumatique, selon ces demandes, comporte un sommet, deux flancs et deux bourrelets, une armature de carcasse ancrée dans les deux bourrelets comprenant des fils formant des allers et retours disposés de façon adjacente, alignés circonférentiellement avec, au niveau de chaque bourrelet, des boucles reliant chaque fois un aller à un retour, et dans chaque bourrelet des moyens d'ancrage de l'armature de carcasse comprenant des piles de fils orientés circonférentiellement bordant axialement lesdits alignements circonférentiels des allers et retours des fils de l'armature de carcasse. Pour ces pneumatiques, la reprise de la tension qui se développe dans les fils de carcasse lors d'un gonflage est uniquement assurée par l'adhésion latérale entre chaque fil de la carcasse et les piles de fils circonférentiels les bordant.

Ces demandes proposent aussi, lorsque la résistance nécessaire de l'armature de carcasse devient telle qu'il n'est plus géométriquement possible de disposer les fils dans les bourrelets en un seul alignement circonférentiel, de conserver, dans chaque flanc, un seul alignement circonférentiel d'allers et retours, et en partant d'un flanc pour rejoindre la base d'un bourrelet, de diviser cet alignement en deux alignements s'écartant axialement progressivement l'un de l'autre.

Cette solution a l'avantage de conserver une très grande souplesse au niveau des flancs tout en permettant d'utiliser une plus grande densité de fils, donc d'augmenter le nombre de fils de carcasse à partir duquel il faut recourir à une carcasse supplémentaire distincte, faute de place dans le bourrelet pour loger l'ensemble des fils.

La demanderesse a cependant constaté que la réalisation d'un tel pneumatique avec comme armature de carcasse un alignement circonférentiel de fils au niveau du sommet et des flancs qui se sépare en deux au niveau des bourrelets est très délicate. En effet, les contraintes d'industrialisation sont telles qu'il est difficile d'éviter qu'un certain nombre de fils viennent au contact les uns des autres, ce qui peut entraîner des problèmes d'endurance.

La présente invention a pour objet de résoudre ce problème.

Dans ce qui suit, on entend par « fil », aussi bien des monofilaments que des multifilaments, ou des assemblages comme des câbles, des retors ou bien encore n'importe quel type d'assemblage équivalent, et ceci, quels que soient la matière et le traitement de ces fils, par exemple traitement de surface ou enrobage ou préencollage pour favoriser l'adhésion sur le caoutchouc.

Par « module d'élasticité » d'un mélange caoutchoutique, on entend un module d'extension sécant obtenu à une déformation d'extension uniaxiale de l'ordre de 10 % à température ambiante.

Un pneumatique selon l'invention comporte un sommet, deux flancs et deux bourrelets, une armature de carcasse ancrée dans les deux bourrelets comprenant des premiers fils formant des allers et retours disposés de façon adjacente, alignés circonférentiellement avec, au niveau de chaque bourrelet, des boucles reliant chaque fois un aller à un retour, et dans chaque bourrelet des moyens d'ancrage de l'armature de carcasse comprenant des seconds fils orientés circonférentiellement bordant axialement les alignements circonférentiels des allers et retours des premiers fils de l'armature de carcasse, ces moyens d'ancrage reprenant la tension qui se développe dans les fils de l'armature de carcasse lors d'un gonflage du pneumatique uniquement par l'adhésion latérale entre chaque fil de l'armature de carcasse et eux, et est caractérisé en ce que ladite armature de carcasse est essentiellement constituée de premiers fils formant deux ou trois alignements circonférentiels séparés, au moins au niveau des bourrelets et des flancs, par une matière de remplissage.

Selon un mode de réalisation préférentiel, la matière de remplissage est complétée, au niveau de chaque bourrelet, par des troisièmes fils orientés circonférentiellement.

L'armature de carcasse selon l'invention présente l'avantage de permettre un espace moyen entre les fils plus grand, ce qui permet, même en cas de fluctuation de cet espace moyen, de mieux garantir leur séparation effective par un mélange caoutchoutique d'enrobage ou une matière de remplissage. Alternativement, grâce à la possibilité de mettre plus de fils sans qu'ils se touchent, pour une résistance d'armature de carcasse donnée, on peut utiliser des fils de section plus petite que dans le cas des solutions présentées précédemment, ce qui entraîne une meilleure résistance de l'ancrage de cette armature dans le bourrelet, notamment lors de fortes sollicitations.

De préférence, la matière de remplissage comprend un premier mélange caoutchoutique de très haut module d'élasticité disposé dans la zone d'ancrage de l'armature de carcasse et un second mélange caoutchoutique de bas module d'élasticité disposé dans la zone du sommet et dans au moins une partie des flancs adjacente au sommet.

Le premier mélange caoutchoutique de très haut module d'élasticité a un module d'élasticité supérieur à 20 MPa et de préférence supérieur à 30 MPa, et le second mélange caoutchoutique de bas module d'élasticité a un module d'élasticité inférieur à 6 MPa et de préférence compris entre 2 et 5 MPa.

L'invention est maintenant décrite à l'aide des dessins suivants :
- la figure 1 est une coupe radiale montrant essentiellement un flanc et un bourrelet d'un pneumatique selon l'invention ;
- la figure 2 est une vue en perspective, montrant schématiquement la disposition d'une partie des fils de renforcement ;

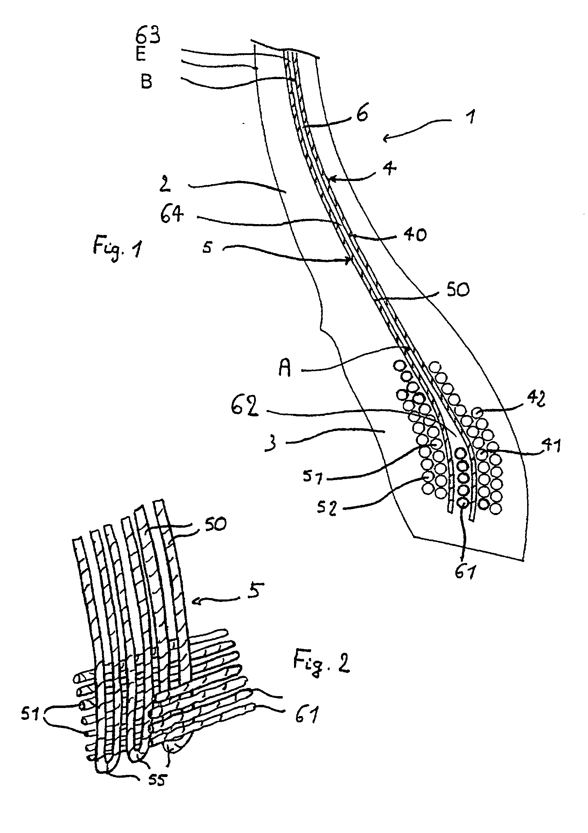

La figure 1 est une coupe radiale montrant essentiellement un flanc 2 et un bourrelet 3 d'un pneumatique 1 selon l'invention. L'armature de carcasse est constituée de deux alignements circonférentiels 4, 5 de premiers fils correspondant dans cette figure aux deux portions de fils 40 et 50. Dans le cas du pneumatique selon l'invention décrit ici, les deux portions de fils 40 et 50 sont orientées radialement dans le flanc 2 et sont constituées de fibres aramides. Les portions de premiers fils 40 et 50 sont disposées parallèlement et sont séparées par une matière de remplissage 6. L'ancrage des deux alignements circonférentiels 4 et 5 de premiers fils est assuré dans le bourrelet 3 par des piles 41, 42, 51, 52 de seconds fils circonférentiels disposées axialement de part et d'autre des portions de premiers fils 40 et 50. De préférence, dans la zone du bourrelet 3, la matière de remplissage 6 est complétée par au moins une pile 61 de troisièmes fils de renforcement circonférentiels. Les piles de seconds et troisièmes fils de renforcement circonférentiels peuvent avantageusement être des enroulements de fils. Les fils circonférentiels et radiaux sont séparés les uns des autres par du mélange caoutchoutique pour éviter tout contact direct d'un fil sur un autre. L'adhésion latérale entre chaque portion de fils 40 et 50 et les piles de fils circonférentiels permet de reprendre la tension qui se développe dans ces portions de fils 40, 50 lors du gonflage du pneumatique.

La matière de remplissage 6 est, dans l'exemple présenté, composée de trois mélanges caoutchoutiques de rigidités variées. Un premier mélange 62 est situé dans la zone d'ancrage de l'armature de carcasse entre les deux alignements circonférentiels de premiers fils, jusqu'à la limite A. Ce premier mélange a un très haut module d'élasticité supérieur à 30 MPa. Un second mélange caoutchoutique 63 est disposé dans la zone du sommet et dans une partie des flancs 2 adjacente au sommet, c'est-à-dire à l'épaule et dans toute la partie radialement au dessus d'une limite B située sensiblement au niveau de l'équateur E. On appelle « équateur » la « ligne » E correspondant à la plus grande largeur axiale du pneumatique. Ce second mélange a un bas module d'élasticité de l'ordre de 2 à 5 MPa. Enfin, un troisième mélange 64 est disposé dans une zone intermédiaire entre les deux limites A et B précédentes. Ce troisième mélange a un module d'élasticité intermédiaire, compris entre 6 et 20 MPa.

La présence dans la zone d'ancrage du premier mélange caoutchoutique de module d'élasticité élevé contribue à la bonne résistance mécanique du bourrelet. En outre, le second mélange caoutchoutique de faible rigidité dans la zone du sommet et dans la partie des flancs adjacente au sommet, au dessus de l'équateur, zone de forte flexion, permet de ne pas augmenter de façon trop marquée la rigidité en flexion des flancs en raison de la présence de deux ou trois alignements circonférentiels de premiers fils.

La figure 2 est une vue en perspective de l'un des alignements circonférentiels de premiers fils, l'alignement 5, dans laquelle seuls les fils de renforcement sont représentés. Dans cette figure, on voit l'alignement circonférentiel 5 de premiers fils qui est constitué de portions de fils 50. A leurs extrémités radialement inférieures, les portions de fil 50 forment des boucles 55 juxtaposées, situées dans le bourrelet 3. Ces boucles 55 sont adjacentes et ne se chevauchent pas. De part et d'autre axialement de l'alignement circonférentiel 5 de premiers fils, sont représentées seulement les piles 61 et 51 axialement directement adjacentes à cet alignement 5.

Pour la clarté du dessin, seule l'alignement circonférentiel 5 de premiers fils et deux piles ont été représentés, mais, l'alignement circonférentiel 4 de premiers fils présente la même disposition des portions de fils 40.

Dans l'exemple présenté, les deux alignements circonférentiels sont séparés sur toute leur longueur par la matière de remplissage 6. Il est aussi possible de limiter au niveau des bourrelets et des flancs la séparation de l'armature de carcasse en deux ou trois alignements circonférentiels et de n'avoir qu'un seul ou deux alignements au niveau du sommet du pneumatique. Dans cette zone, en effet, les sollicitations mécaniques subies par les armatures de carcasse sont notablement plus faibles que dans la zone des flancs.

La confection du pneumatique selon l'invention peut avantageusement être réalisée sur un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Cette confection peut notamment utiliser les dispositifs décrits dans le brevet EP 0 243 851 pour la pose des fils du renfort de carcasse et EP 0 264 600 pour la pose des gommes caoutchoutiques. Le pneumatique peut alors être moulé et vulcanisé comme exposé dans le brevet US 4 895 692.

Le pneumatique selon l'invention présente deux avantages intéressants.

Tout d'abord, le risque de contact d'un fil sur un autre des portions de fils 40 et 50 des alignements circonférentiels 4 et 5 de premiers fils est considérablement réduit. Cela permet notamment de relâcher les tolérances de fonctionnement d'une fabrication industrielle, gage de fiabilité et de coût moindre. Cela fiabilise aussi l'endurance du pneumatique.

D'autre part, pour une résistance à la rupture de l'armature de carcasse donnée, soit pour une section cumulée des portions de premiers fils 40 et 50 donnée, la présence de deux alignements circonférentiels 4 et 5 de fils parallèles permet, relativement à la solution préconisée dans la demande de brevet EP 582 196 où il y a un seul alignement circonférentiel de fils dans le sommet et les flancs qui se décompose en deux dans les bourrelets, d'utiliser un plus grand nombre de fils. En conséquence le diamètre des fils utilisés est inférieur et la surface de contact cumulée entre ces fils et les mélanges caoutchoutiques adjacents est supérieure, ce qui à l'avantage d'améliorer la résistance mécanique du bourrelet, notamment lors de fortes sollicitations.

La demanderesse a aussi constaté que la présence au niveau des flancs 2 d'une armature de carcasse composée de deux ou trois alignements circonférentiels parallèles n'augmentait pas de façon dommageable la rigidité en flexion des flancs. Ce résultat est notamment lié à la présence, entre les alignements circonférentiels, d'un mélange caoutchoutique de faible rigidité. En revanche, au delà de trois alignements de fils, la rigidité en flexion pourrait devenir trop importante.

## Revendications

1. Pneumatique (1) comportant un sommet, deux flancs (2) et deux bourrelets (3), des premiers fils (40,50) formant des allers et retours disposés de façon adjacente, alignés circonférentiellement, ancrés dans les deux bourrelets avec, au niveau de chaque bourrelet, des boucles (55) reliant chaque fois un aller à un retour et, dans chaque bourrelet des moyens d'ancrage (41,42,51,52,61) desdits premiers fils comprenant des seconds fils orientés circonférentiellement bordant axialement ledit alignement circonférentiel desdits allers et retours des premiers fils, lesdits moyens d'ancrage reprenant la tension qui se développe dans les fils de l'armature de carcasse lors d'un gonflage du pneumatique uniquement par l'adhésion latérale entre chaque fil de l'armature de carcasse et lesdits moyens d'ancrage, **caractérisé en ce que**, au moins au niveau des bourrelets et des flancs, les premiers fils (40,50) forment deux alignements circonférentiels séparés par une matière de remplissage (6).

2. Pneumatique (1) comportant un sommet, deux flancs (2) et deux bourrelets (3), des premiers fils (40,50) formant des allers et retours disposés de façon adjacente, alignés circonférentiellement, ancrés dans les deux bourrelets avec, au niveau de chaque bourrelet, des boucles (55) reliant chaque fois un aller à un retour et, dans chaque bourrelet des moyens d'ancrage (41,42,51,52,61) desdits premiers fils comprenant des seconds fils orientés circonférentiellement bordant axialement ledit alignement circonférentiel desdits allers et retours des premiers fils, lesdits moyens d'ancrage reprenant la tension qui se développe dans les fils de l'armature de carcasse lors d'un gonflage du pneumatique uniquement par l'adhésion latérale entre chaque fil de l'armature de carcasse et lesdits moyens d'ancrage, **caractérisé en ce que**, au moins au niveau des bourrelets et des flancs, les premiers fils (40,50) forment trois alignements circonférentiels séparés par une matière de remplissage (6).

3. Pneumatique selon l'une des revendications 1 ou 2, dans lequel ladite matière de remplissage est complétée au niveau de chaque bourrelet, par des troisièmes fils (61) orientés circonférentiellement.

4. Pneumatique selon l'une des revendications 1 à 3, dans lequel la matière de remplissage comprend un premier mélange caoutchoutique (62) de très haut module d'élasticité disposé dans la zone d'ancrage des premiers fils et un second mélange caoutchoutique (63) de bas module d'élasticité disposé dans la zone du sommet et dans au moins une partie des flancs adjacente au sommet.

5. Pneumatique selon la revendication 4, dans lequel le premier mélange caoutchoutique (62) de très haut module d'élasticité a un module d'élasticité supérieur à 20 MPa et de préférence supérieur à 30 MPa, et dans lequel le second mélange caoutchoutique (63) de bas module d'élasticité a un module d'élasticité inférieur à 6 MPa et de préférence compris entre 2 et 5 MPa.

6. Pneumatique selon l'une des revendications 4 ou 5, dans lequel la matière de remplissage comprend, en outre, un troisième mélange caoutchoutique (64) de module d'élasticité intermédiaire disposé dans une partie du flanc entre la zone d'ancrage des premiers fils où est disposé le premier mélange caoutchoutique et la partie du flanc adjacente au sommet où est disposé le second mélange caoutchoutique.

## Patentansprüche

1. Reifen (1) mit einem Scheitel, zwei Flanken (2) und zwei Wülsten (3), wobei erste Drähte (40, 50) hin- und zurücklaufende Abschnitte nebeneinanderliegend bilden, die in Umfangsrichtung ausgerichtet sind und auf Höhe eines jeden Wulstes in den beiden Wülsten mit Schlaufen (55) verankert sind, die jedesmal einen hin- und zurücklaufenden Abschnitt verbinden, sowie in jedem Wulst Verankerungsmitteln (41, 42, 51, 52, 61) der genannten ersten Drähte, mit zweiten Drähten, die in Umfangsrichtung orientiert sind und axial an die genannte Umfangsreihe der genannten hin- und zurücklaufenden Abschnitte der ersten Drähte angrenzen, wobei diese genannten Verankerungsmittel die Spannung aufnehmen, die sich in den Drähten der Karkassenbewehrung während eines Aufpumpens des Reifens einzig und allein durch die seitliche Adhäsion zwischen jedem Draht der Karkassenbewehrung und den genannten Verankerungsmitteln entwikkelt, **dadurch gekennzeichnet, daß** mindestens auf Höhe der Wülste und der Flanken die ersten Drähte (40, 50) zwei Umfangsreihen bilden, die durch ein Füllmaterial (6) getrennt sind.

2. Reifen (1) mit einem Scheitel, zwei Flanken (2) und zwei Wülsten (3), wobei erste Drähte (40, 50) hin- und zurücklaufende Abschnitte nebeneinanderliegend bilden, die in Umfangsrichtung ausgerichtet sind und auf Höhe eines jeden Wulstes in den beiden Wülsten mit Schlaufen (55) verankert sind, die jedesmal einen hin- und zurücklaufenden Abschnitt verbinden, sowie in jedem Wulst Verankerungsmitteln (41, 42, 51, 52, 61) der genannten ersten Drähte, mit zweiten Drähten, die in Umfangsrichtung orientiert sind und axial an die genannte Umfangsreihe der genannten hin- und zurücklaufenden Abschnitte der ersten Drähte angrenzen, wobei diese genannten Verankerungsmittel die Spannung aufnehmen, die sich in den Drähten der Karkassenbewehrung während eines Aufpumpens des Reifens einzig und allein durch die seitliche Adhäsion zwischen jedem Draht der Karkassenbewehrung und den genannten Verankerungsmitteln entwikkelt, **dadurch gekennzeichnet, daß** mindestens auf Höhe der Wülste und der Flanken die ersten Drähte (40, 50) drei Umfangsreihen bilden, die durch ein Füllmaterial (6) getrennt sind.

3. Reifen nach einem der Ansprüche 1 oder 2, worin das genannte Füllmaterial auf Höhe eines jeden Wulstes durch dritte Drähte (61) vervollständigt wird, die in Umfangsrichtung orientiert sind.

4. Reifen nach einem der Ansprüche 1 bis 3, worin das Füllmaterial eine erste, gummihaltige Mischung (62) mit sehr hohem Elastizitätsmodul aufweist, die in der Verankerungszone der ersten Drähte angeordnet ist, und eine zweite, gummihaltige Mischung (63) mit niedrigem Elastizitätsmodul, die in der Scheitelzone und in mindestens einem Teil der Flanken nahe dem Scheitel angeordnet ist.

5. Reifen nach Anspsruch 4, worin die erste, gummihaltige Mischung (62) mit sehr hohem Elastizitätsmodul einen Elastizitätsmodul von über 20 MPa und bevorzugt mehr als 30 MPa aufweist, und worin die zweite, gummihaltige Mischung (63) mit niedrigem Elastizitätsmodul einen Elastizitätsmodul von weniger als 6 MPa aufweist, der bevorzugt zwischen 2 und 5 MPa liegt.

6. Reifen nach einem der Ansprüche 4 oder 5, worin das Füllmaterial außerdem eine dritte, gummihaltige Mischung (64) mit mittlerem Elastizitätsmodul aufweist, die in dem ein Teil der Flanke zwischen der Verankerungszone der ersten Drähte, wo die erste, gummihaltige Mischung angeordnet ist, und dem Teil der Flanke nahe dem Scheitel angeordnet ist, wo die zweite, gummihaltige Mischung angeordnet ist.

## Claims

1. Tyre (1) comprising a crown, two sidewalls (2) and two beads (3), first cords (40, 50) which form back and forth arrangements and are disposed in an adjacent manner, aligned circumferentially, anchored in the two beads with, in each bead, loops (55) which each connect a back portion to a forth portion and, in each bead means of anchoring (41, 42, 51, 52, 61) said first cords comprising second cords orientated circumferentially and axially bordering said circumferential line of said back and forth arrangements of the first cords, said anchoring means taking up the tension which is developed in the cords of the carcass reinforcement upon inflation of the tyre solely by means of lateral adhesion between each cord of the carcass reinforcement and said anchoring means, **characterised in that**, at least in the beads and the sidewalls, the first cords (40, 50) form two circumferential lines separated by a filler (6).

2. Tyre (1) comprising a crown, two sidewalls (2) and two beads (3), first cords (40, 50) which form back and forth arrangements and are disposed in an adjacent manner, aligned circumferentially, anchored in the two beads with, in each bead, loops (55) which each connect a back portion to a forth portion and, in each bead means of anchoring (41, 42, 51, 52, 61) said first cords comprising second cords orientated circumferentially and axially bordering said circumferential line of said back and forth arrangements of the first cords, said anchoring means taking up the tension which is developed in the cords of the carcass reinforcement upon inflation of the tyre solely by means of lateral adhesion between each cord of the carcass reinforcement and said anchoring means, **characterised in that**, at least in the beads and the sidewalls, the first cords (40, 50) form three circumferential lines separated by a filler (6).

3. Tyre according to one of the claims 1 or 2, in which said filler is supplemented in each bead by third cords (61) which are orientated circumferentially.

4. Tyre according to one of the claims 1 to 3, in which the filler comprises a first rubber mix (62) with a very high modulus of elasticity disposed in the anchorage zone of the first cords and a second rubber mix (63) with a low modulus of elasticity disposed in the zone of the crown and in at least one part of the sidewalls adjacent to the crown.

5. Tyre according to claim 4, in which the first rubber mix (62) with a very high modulus of elasticity has a modulus of elasticity great than 20 MPa and preferably greater than 30 MPa, and in which the second rubber mix (63) with a low modulus of elasticity has a modulus of elasticity less than 6 MPa and preferably between 2 and 5 MPa.

6. Tyre according to one of the claims 4 or 5, in which the filler comprises in addition a third rubber mix (64) with an intermediate modulus of elasticity disposed in a part of the sidewall between the anchorage zone of the first cords where the first rubber mix is disposed and the part of the sidewall adjacent to the crown where the second rubber mix is disposed.
